# EUROPEAN PATENT APPLICATION

(11) **EP 4 156 319 A1**
(43) Date of publication of application: **29.03.2023**
(21) Application number: 21807689.1
(22) Date of filing: 20.05.2021
(51) Int. Cl.: H01M 4/13, H01M 4/139, H01M 10/0525

(54) **HIGH-LOAD ELECTRODE, PREPARATION METHOD THEREFOR, AND LITHIUM ION BATTERY THEREOF**

(30) Priority: 20.05.2020 CN 202010429525
(71) Applicant: Tianjin EV Energies Co., Ltd., Tianjin 300380 (CN)
(72) Inventor: MA, Hua, Tianjin 300380 (CN); LIU, Feng, Tianjin 300380 (CN); ZHENG, Yanjun, Tianjin 300380 (CN); CONG, Changjie, Tianjin 300380 (CN); WANG, Chiwei, Tianjin 300380 (CN)
(74) Representative: Cabinet Beaumont
(86) International application number: PCT/CN2021/094940
(87) International publication number: WO 2021/233387

(57) **Abstract**

The present application relates to a high-load electrode. The periphery of a current collector is coated with at least two layers of slurry from inside to outside, and the slurry comprises an active substance, a conductive agent, and a binder; in a perpendicular direction from the outer surface of a pole piece to the surface of the current collector, the weight ratios of the binder in the respective layers of slurry are sequentially increased, and the weight ratios of the conductive agent are sequentially increased; the rolling compression amounts of the respective layers of slurry are sequentially reduced, and the sum of the grinding thicknesses of the respective layers of slurry reaches a design-required thickness.

## Description

### TECHNICAL FIELD

The present application belongs to the technical field of lithium-ion batteries and relates to a high-load electrode, a method for preparing the high-load electrode, and a lithium-ion battery thereof.

### BACKGROUND

With the development of science and technology, lithium-ion batteries are gradually applied in many fields from portable electronic products to electric vehicles, energy storage power sources, aviation, and the like. In particular, to shorten the gap in application between electric vehicles and conventional vehicles, the cruising range of a single charge and the service life of an electric vehicle need to be prolonged as much as possible on the premise that safety is ensured, and the cruising range is desired to be affected as little as possible by the temperature, especially a low temperature. Therefore, a battery for the electric vehicle needs to have a higher energy density, a longer cycle life, and a stronger low temperature discharge capability, which imposes higher requirements on the energy density, cycle life, and low temperature discharge performance of a lithium-ion battery. At present, there are various methods for increasing the energy density, which are implemented by increasing the thicknesses of positive and negative electrodes (that is, increasing the loadings of positive and negative electrode materials), increasing the compacted density of an active material, and increasing the capacity per gram of an active substance. Relatively speaking, increasing the loading of an electrode piece is the most direct method for increasing the energy density of the battery. Compared with increasing compaction, increasing the loading of the electrode piece, on the one hand, can significantly reduce the amount of inactive substances such as current collectors at the positive and negative electrodes and separators and save material costs, on the other hand, can significantly reduce the production procedures of the battery such as the coating, drying, rolling, cutting, and assembling of pole pieces and save production costs.

At present, there are certain technical difficulties in the actual production and application of a thick electrode. As the thickness of the electrode piece is increased, an electrolyte has a poor impregnation effect, the pole piece has an increased internal resistance due to internal polarization, and other problems may also easily occur, degrading the capacity per gram, cycle performance, and low temperature discharge performance of the battery.

### SUMMARY

An object of the present application is to provide a high mass loading electrode, a method for preparing the high-load electrode and a lithium-ion battery thereof. The use of the high-load electrode can shorten a liquid absorption time and improve an impregnation effect. The corresponding lithium-ion battery has a high capacity per gram, a long cycle, and good low temperature discharge performance.

To achieve the object, the present application adopts technical solutions described below.

A high-load electrode includes a current collector coated with at least two layers of slurry on a periphery of the current collector from inside to outside. The slurry includes an active substance, a conductive agent and a binder. According to a sequence of coating, a weight ratio of the binder and a weight ratio of the conductive agent decrease in sequence in the respective layers of slurry, rolling compression amounts of the respective layers of slurry increase in sequence, and a sum of rolling thicknesses of the respective layers of slurry reaches a design requirement.

In an embodiment of the present application, examples of the active substance in a positive electrode slurry include, but are not limited to, materials having a lithium ion release function, such as lithium nickel cobalt manganate, lithium cobaltate, lithium manganate, lithium iron phosphate, and lithium manganese phosphate.

In an embodiment of the present application, examples of the conductive agent in the positive electrode slurry include, but are not limited to, materials having a high electronic conductivity, such as conductive carbon black, carbon nanotubes, and graphene.

In an embodiment of the present application, examples of the binder in the positive electrode slurry include, but are not limited to, macromolecular compounds having an adhesive effect, such as polytetrafluoroethylene, polyimide, polyacrylic acid, and polyacrylonitrile.

In an embodiment of the present application, examples of the active substance in a negative electrode slurry include, but are not limited to, materials having a lithium ion intercalation function, such as a graphite material, a silicon-based material, and lithium titanate.

In an embodiment of the present application, examples of the conductive agent in the negative electrode slurry include, but are not limited to, materials having a high electronic conductivity, such as conductive carbon black, carbon nanotubes, and graphene.

In an embodiment of the present application, examples of the binder in the negative electrode slurry include, but are not limited to, macromolecular compounds having an adhesive effect, such as carboxymethyl cellulose, styrene-butadiene rubber, polyimide, polyacrylic acid, and polyacrylonitrile.

The present application further provides a method for preparing the preceding high-load electrode. The method includes conventional steps such as slurry preparation, slurry coating, drying, and rolling.

The present application further provides a lithium-ion battery using the preceding high-load electrode.

The present application has the beneficial effects below.

In the present application, the content of the conductive agent can be controlled through sequential coating to be increase from low to high in a perpendicular direction from an outer surface of a pole piece to a surface of the current collector so that the distribution of an ohmic resistance inside the pole piece is optimized and the polarization in the thickness direction of the pole piece is improved, improving the charge and discharge performance of the battery; the content of the binder is controlled to increase from low to high in the perpendicular direction from the outer surface of the pole piece to the surface of the current collect so that the adhesive force of a portion of the active substance closer to the current collector can be increased and the degree of separation of the active substance from the current collector due to shrinkage and expansion of the pole piece during a cycle can be reduced, thereby improving the cycle performance of the battery. Additionally, in the present application, the porosity is controlled through sequential rolling to increase from low to high in the perpendicular direction from the outer surface of the pole piece to the surface of the current collect so that the active substance closer to the current collector is more thoroughly impregnated, thereby increasing ion channels and improving the charge and discharge performance.

### BRIEF DESCRIPTION OF DRAWINGS

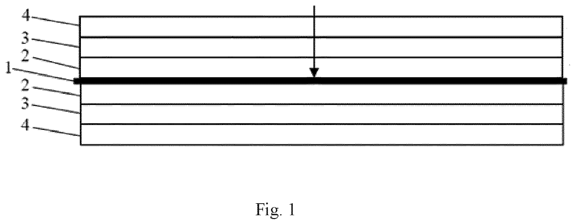

FIG. 1 is a structural diagram of three layers of slurry coated on the periphery of a current collector according to an embodiment of the present invention, where the direction of an arrow represents a perpendicular direction from an outer surface of a pole piece to a surface of the current collector.

### Reference list

- 1: current collector
- 2: coating A
- 3: coating B
- 4: coating C

### DETAILED DESCRIPTION

It is to be noted that if not in collision, the examples and features therein in the present application can be combined with each other.

The present application is described below in detail with reference to drawings and in conjunction with examples.

### Example 1

A high-load pole piece of a positive electrode was fabricated as follows.
a. The positive active substance NCM622, conductive agent 1 (SP), conductive agent 2 (CNTs), and binder (PVDF) were poured into *N*-methyl-2-pyrrolidone at a weight ratio of 94.6: 1.6: 1.6:2.2, mixed, and uniformly stirred to prepare a positive electrode slurry A having a solid content of 75%.
b. The positive active substance NCM622 , conductive agent 1 (SP), conductive agent 2 (CNTs), and binder (PVDF) were poured into *N*-methyl-2-pyrrolidone at a weight ratio of 95.4:1.4:1.4:1.8, mixed, and uniformly stirred to prepare a positive electrode slurry B having a solid content of 75%.
c. The positive electrode slurry A was coated on a current collector made of aluminum foil, the dried coating had a total loading of 50 mg/cm² and a total thickness of 200 µm, and the rolled coating had a thickness of 180 µm so that a pole piece A of the positive electrode was obtained.
d. The positive electrode slurry B was coated on the pole piece A of the positive electrode, the dried coating had a total loading of 100 mg/cm² and a total thickness of 380 µm, and the rolled coating had a thickness of 300 µm so that the high-load pole piece of the positive electrode was obtained.
e. Propylene carbonate (PC, 5µL) was dropped onto the high-load pole piece of the positive electrode, and the time for PC disappearance (liquid absorption time) was recorded as 613s.

A high-load pole piece of a negative electrode was fabricated as follows.
a. The negative active substance artificial graphite, conductive agent (SP), binder sodium carboxymethyl cellulose (CMC), and binder styrene-butadiene rubber (SBR) were added to water at a weight ratio of 93.4:2.5:1.5:2.6, stirred, and uniformly mixed to obtain a negative electrode slurry A having a solid content of 50%.
b. The negative active substance artificial graphite, conductive agent (SP), binder sodium carboxymethyl cellulose (CMC), and binder styrene-butadiene rubber (SBR) were added to water at a weight ratio of 94.6:1.5:1.5:2.4, stirred, and uniformly mixed to obtain a negative electrode slurry B having a solid content of 50%.
c. The negative electrode slurry A was coated on a current collector made of copper foil, the dried coating had a total loading of 20 mg/cm² and a total thickness of 200 µm, and the rolled coating had a thickness of 180 µm so that a pole piece A of the negative electrode was obtained.
d. The negative electrode slurry B was coated on the pole piece A of the negative electrode, the dried coating had a total loading of 40 mg/cm² and a total thickness of 380 µm, and the rolled coating had a thickness of 300 µm so that a thick pole piece of the negative electrode was obtained.
e. Propylene carbonate (PC, 5 µL) was dropped onto the high-load pole piece of the negative electrode, and the time for PC disappearance (liquid absorption time) was recorded as 88s.

A lithium-ion battery was fabricated as follows.
a. The high-load pole piece of the positive electrode and the high-load pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted.

### Example 2

A high-load pole piece of a positive electrode was fabricated as follows.
a. The positive active substance NCM622, conductive agent 1 (SP), conductive agent 2 (CNTs), and binder (PVDF) were poured into *N*-methyl-2-pyrrolidone at a weight ratio of 94.4:1.7:1.7:2.2, mixed, and uniformly stirred to prepare a positive electrode slurry A having a solid content of 75%.
b. The positive active substance NCM622, conductive agent 1 (SP), conductive agent 2 (CNTs), and binder (PVDF) were poured into *N*-methyl-2-pyrrolidone at a weight ratio of 95.0:1.5:1.5:2.0, mixed, and uniformly stirred to prepare a positive electrode slurry B having a solid content of 75%.
c. The positive active substance NCM622, conductive agent 1 (SP), conductive agent 2 (CNTs), and binder (PVDF) were poured into N-methyl-2-pyrrolidone at a weight ratio of 95.6:1.3:1.3:1.8, mixed, and uniformly stirred to prepare a positive electrode slurry C having a solid content of 75%.
d. The positive electrode slurry A was coated on a current collector made of aluminum foil, the dried coating had a total loading of 30 mg/cm² and a total thickness of 120 µm, and the rolled coating had a thickness of 108 µm so that a pole piece A of the positive electrode was obtained.
e. The positive electrode slurry B was coated on the pole piece A of the positive electrode, the dried coating had a total loading of 60 mg/cm² and a total thickness of 228 µm, and the rolled coating had a thickness of 201 µm so that a pole piece B of the positive electrode was obtained.
f. The positive electrode slurry C was coated on the pole piece B of the positive electrode, the dried coating had a total loading of 100 mg/cm² and a total thickness of 360 µm, and the rolled coating had a thickness of 361 µm so that the high-load pole piece of the positive electrode was obtained.
g. Propylene carbonate (PC, 5 µL) was dropped onto the high-load pole piece of the positive electrode, and the time for PC disappearance (liquid absorption time) was recorded as 598s.

A high-load pole piece of a negative electrode was fabricated as follows.
a. The negative active substance artificial graphite, conductive agent (SP), binder sodium carboxymethyl cellulose (CMC), and binder styrene-butadiene rubber (SBR) were added to water at a weight ratio of 93.3:2.2:1.5:3.0, stirred, and uniformly mixed to obtain a negative electrode slurry A having a solid content of 50%.
b. The negative active substance artificial graphite, conductive agent (SP), binder sodium carboxymethyl cellulose (CMC), and binder styrene-butadiene rubber (SBR) were added to water at a weight ratio of 94.0:2.0:1.5:2.5, stirred, and uniformly mixed to obtain a negative electrode slurry B having a solid content of 50%.
c. The negative active substance artificial graphite, conductive agent (SP), binder sodium carboxymethyl cellulose (CMC), and binder styrene-butadiene rubber (SBR) were added to water at a weight ratio of 94.7:1.8:1.5:2.0, stirred, and uniformly mixed to obtain a negative electrode slurry C having a solid content of 50%.
d. The negative electrode slurry A was coated on a current collector made of copper foil, the dried coating had a total loading of 12 mg/cm² and a total thickness of 120 µm, and the rolled coating had a thickness of 108 µm so that a pole piece A of the negative electrode was obtained.
e. The negative electrode slurry B was coated on the pole piece A of the negative electrode, the dried coating had a total loading of 24 mg/cm² and a total thickness of 228 µm, and the rolled coating had a thickness of 201 µm so that a pole piece B of the negative electrode was obtained.
f. The negative electrode slurry C was coated on the pole piece B of the negative electrode, the dried coating had a total loading of 40 mg/cm² and a total thickness of 361 µm, and the rolled coating had a thickness of 300 µm so that a thick pole piece of the negative electrode was obtained.
e. Propylene carbonate (PC, 5 µL) was dropped onto the high-load pole piece of the negative electrode, and the time for PC disappearance (liquid absorption time) was recorded as 71s.

A lithium-ion battery was fabricated as follows.
a. The high-load pole piece of the positive electrode and the high-load pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted.

### Comparative Example 1

A high-load pole piece of a positive electrode was fabricated as follows.
a. The positive active substance NCM622, conductive agent 1 (SP), conductive agent 2 (CNTs), and binder (PVDF) were poured into N-methyl-2-pyrrolidone at a weight ratio of 95:1.5:1.5:2, mixed, and uniformly stirred to prepare a positive electrode slurry having a solid content of 75%.
b. The positive electrode slurry was coated on a current collector made of aluminum foil, the dried coating had a total loading of 100 mg/cm² and a total thickness of 400 µm, and the rolled coating had a thickness of 300 µm so that the high-load pole piece of the positive electrode was obtained.
c. Propylene carbonate (PC, 5 µL) was dropped onto the high-load pole piece of the positive electrode, and the time for PC disappearance (liquid absorption time) was recorded as 678s.

A high-load pole piece of a negative electrode was fabricated as follows.
a. The negative active substance artificial graphite, conductive agent (SP), binder sodium carboxymethyl cellulose (CMC), and binder styrene-butadiene rubber (SBR) were added to water at a weight ratio of 94:2:1.5:2.5, stirred, and uniformly mixed to obtain a negative electrode slurry having a solid content of 50%.
b. The negative electrode slurry was coated on a current collector made of copper foil, the dried coating had a total loading of 40 mg/cm² and a total thickness of 400 µm, and the rolled coating had a thickness of 300 µm so that the high-load pole piece of the negative electrode was obtained.
c. Propylene carbonate (PC, 5 µL) was dropped onto the high-load pole piece of the negative electrode, and the time for PC disappearance (liquid absorption time) was recorded as 106s.

A lithium-ion battery was fabricated as follows.
a. The high-load pole piece of the positive electrode and the high-load pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted.

A 0.5C/0.5C charge/discharge cycle test was separately performed on Example 1, Example 2, and Comparative Example 1 at a temperature of 25 °C, and the capacity per gram of the first discharge capacity and the capacity retention rate of the battery after 800 cycles were recorded. Additionally, a 0.5C discharge test was performed on the battery at 25 °C/0 °C/-10 °C/-20 °C, and the capacity retention rates at different temperatures were recorded. The results are shown in Table 1.

**Table 1**

| No. | Coating Thickn ess/µm | Liqui d Absor ption | Liqui d Absor ption | Capacity per Gram of the Positive | Capacity Retention Rate at Different Temperatures/% | | | | Capa city Rete ntion |
|---|---|---|---|---|---|---|---|---|---|
| | | | | | 25 °C/ 25°C | 0 °C/ 25 °C | - 10 °C/ | - 20 °C/ | |
| | | | | | | | | | |

| | | Time of the Positi ve Electr ode/s | Time of the Negat ive Electr ode/s | Electrode/ mAh.g⁻¹ | | | 25 °C | 25 °C | Rate after 800 Cycl es/% |
|---|---|---|---|---|---|---|---|---|---|
| Examp le 1 | 300 | 613 | 88 | 175 | 100% | 94.8 % | 91.3% | 85.7% | 85.8 % |
| Examp le 2 | 300 | 598 | 71 | 178 | 100% | 96.2 % | 93.4% | 87.8% | 87.6 % |
| Compa rative Examp le 1 | 300 | 678 | 106 | 168 | 100% | 86.7 % | 80.2% | 72.8% | 64.4 % |

### Example 3

A high-load pole piece of a positive electrode was fabricated as follows.
a. The positive active substance NCM811, conductive agent 1 (SP), conductive agent 2 (CNTs), and binder (PVDF) were poured into N-methyl-2-pyrrolidone at a weight ratio of 94.4: 1.5: 1.5:2.6, mixed, and uniformly stirred to prepare a positive electrode slurry A having a solid content of 75%.
b. The positive active substance NCM811, conductive agent 1 (SP), conductive agent 2 (CNTs), and binder (PVDF) were poured into N-methyl-2-pyrrolidone at a weight ratio of 95.2: 1.2: 1.2:2.4, mixed, and uniformly stirred to prepare a positive electrode slurry B having a solid content of 75%.
c. The positive electrode slurry A was coated on a current collector made of aluminum foil, the dried coating had a total loading of 63 mg/cm² and a total thickness of 250 µm, and the rolled coating had a thickness of 220 µm so that a pole piece A of the positive electrode was obtained.
d. The positive electrode slurry B was coated on the pole piece A of the positive electrode, the dried coating had a total loading of 126 mg/cm² and a total thickness of 470 µm, and the rolled coating had a thickness of 380 µm so that the high-load pole piece of the positive electrode was obtained.
e. Propylene carbonate (PC, 5µL) was dropped onto the high-load pole piece of the positive electrode, and the time for PC disappearance (liquid absorption time) was recorded as 663s.

A thick pole piece of a negative electrode was fabricated as follows.
a. The negative active substance artificial graphite, conductive agent (SP), binder sodium carboxymethyl cellulose (CMC), and binder styrene-butadiene rubber (SBR) were added to water at a weight ratio of 93.3:2.2:1.5:3.0, stirred, and uniformly mixed to obtain a negative electrode slurry A having a solid content of 50%.
b. The negative active substance artificial graphite, conductive agent (SP), binder sodium carboxymethyl cellulose (CMC), and binder styrene-butadiene rubber (SBR) were added to water at a weight ratio of 93.7:2.0:1.5:2.8, stirred, and uniformly mixed to obtain a negative electrode slurry B having a solid content of 50%.
c. The negative electrode slurry A was coated on a current collector made of copper foil, the dried coating had a total loading of 25 mg/cm² and a total thickness of 250 µm, and the rolled coating had a thickness of 220 µm so that a pole piece A of the negative electrode was obtained.
d. The negative electrode slurry B was coated on the pole piece A of the negative electrode, the dried coating had a total loading of 50 mg/cm² and a total thickness of 470 µm, and the rolled coating had a thickness of 380 µm so that a high-load pole piece of the negative electrode was obtained.
e. Propylene carbonate (PC, 5 µL) was dropped onto the high-load pole piece of the negative electrode, and the time for PC disappearance (liquid absorption time) was recorded as 95s.

A lithium-ion battery was fabricated as follows.
a. The high-load pole piece of the positive electrode and the high-load pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted.

### Example 4

A high-load pole piece of a positive electrode was fabricated as follows.
a. The positive active substance NCM811, conductive agent 1 (SP), conductive agent 2 (CNTs), and binder (PVDF) were poured into N-methyl-2-pyrrolidone at a weight ratio of 93.6:1.8:1.8:2.8, mixed, and uniformly stirred to prepare a positive electrode slurry A having a solid content of 75%.
b. The positive active substance NCM811, conductive agent 1 (SP), conductive agent 2 (CNTs), and binder (PVDF) were poured into N-methyl-2-pyrrolidone at a weight ratio of 94.4:1.5:1.5:2.6, mixed, and uniformly stirred to prepare a positive electrode slurry B having a solid content of 75%.
c. The positive active substance NCM811, conductive agent 1 (SP), conductive agent 2 (CNTs), and binder (PVDF) were poured into N-methyl-2-pyrrolidone at a weight ratio of 95.2:1.2:1.2:2.4, mixed, and uniformly stirred to prepare a positive electrode slurry C having a solid content of 75%.
d. The positive active substance NCM811, conductive agent 1 (SP), conductive agent 2 (CNTs), and binder (PVDF) were poured into N-methyl-2-pyrrolidone at a weight ratio of 96:0.9:0.9:2.2, mixed, and uniformly stirred to prepare a positive electrode slurry D having a solid content of 75%.
e. The positive electrode slurry A was coated on a current collector made of aluminum foil, the dried coating had a total loading of 32 mg/cm² and a total thickness of 125 µm, and the rolled coating had a thickness of 119 µm so that a pole piece A of the positive electrode was obtained.
f. The positive electrode slurry B was coated on the pole piece A of the positive electrode, the dried coating had a total loading of 63 mg/cm² and a total thickness of 244 µm, and the rolled coating had a thickness of 227 µm so that a pole piece B of the positive electrode was obtained.
g. The positive electrode slurry C was coated on the pole piece B of the positive electrode, the dried coating had a total loading of 95 mg/cm² and a total thickness of 352 µm, and the rolled coating had a thickness of 317 µm so that a pole piece C of the positive electrode was obtained.
h. The positive electrode slurry D was coated on the pole piece C of the positive electrode, the dried coating had a total loading of 126 mg/cm² and a total thickness of 442 µm, and the rolled coating had a thickness of 380 µm so that the high-load pole piece of the positive electrode was obtained.
i. Propylene carbonate (PC, 5 µL) was dropped onto the high-load pole piece of the negative electrode, and the time for PC disappearance (liquid absorption time) was recorded as 608s.

A thick pole piece of a negative electrode was fabricated as follows.
a. The negative active substance artificial graphite, conductive agent (SP), binder sodium carboxymethyl cellulose (CMC), and binder styrene-butadiene rubber (SBR) of the negative electrode were added to water at a weight ratio of 92.9:2.4:1.5:3.2, stirred, and uniformly mixed to obtain a negative electrode slurry A having a solid content of 50%.
b. The negative active substance artificial graphite, conductive agent (SP), binder sodium carboxymethyl cellulose (CMC), and binder styrene-butadiene rubber (SBR) were added to water at a weight ratio of 93.3:2.2:1.5:3.0, stirred, and uniformly mixed to obtain a negative electrode slurry B having a solid content of 50%.
c. The negative active substance artificial graphite, conductive agent (SP), binder sodium carboxymethyl cellulose (CMC), and binder styrene-butadiene rubber (SBR) were added to water at a weight ratio of 93.7:2.0:1.5:2.8, stirred, and uniformly mixed to obtain a negative electrode slurry C having a solid content of 50%.
d. The negative active substance artificial graphite, conductive agent (SP), binder sodium carboxymethyl cellulose (CMC), and binder styrene-butadiene rubber (SBR) were added to water at a weight ratio of 94.1:1.8:1.5:2.6, stirred, and uniformly mixed to obtain a negative electrode slurry D having a solid content of 50%.
e. The negative electrode slurry A was coated on a current collector made of copper foil, the dried coating had a total loading of 13 mg/cm² and a total thickness of 125 µm, and the rolled coating had a thickness of 119 µm so that a pole piece A of the negative electrode was obtained.
f. The negative electrode slurry B was coated on the pole piece A of the negative electrode, the dried coating had a total loading of 25 mg/cm² and a total thickness of 244 µm, and the rolled coating had a thickness of 227 µm so that a pole piece B of the negative electrode was obtained.
g. The negative electrode slurry C was coated on the pole piece B of the negative electrode, the dried coating had a total loading of 38 mg/cm² and a total thickness of 352 µm, and the rolled coating had a thickness of 317 µm so that a pole piece C of the negative electrode was obtained.
h. The negative electrode slurry D was coated on the pole piece C of the negative electrode, the dried coating had a total loading of 50 mg/cm² and a total thickness of 442 µm, and the rolled coating had a thickness of 380 µm so that a high-load pole piece of the negative electrode was obtained.
i. Propylene carbonate (PC, 5 µL) was dropped onto the high-load pole piece of the negative electrode, and the time for PC disappearance (liquid absorption time) was recorded as 82s.

A lithium-ion battery was fabricated as follows.
a. The high-load pole piece of the positive electrode and the high-load pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted.

### Comparative Example 2

A high-load pole piece of a positive electrode was fabricated as follows.
a. The positive active substance NCM811, conductive agent 1 (SP), conductive agent 2 (CNTs), and binder (PVDF) were poured into N-methyl-2-pyrrolidone at a weight ratio of 94.8:1.35:1.35:2.5, mixed, and uniformly stirred to prepare a positive electrode slurry having a solid content of 75%.
b. The positive electrode slurry was coated on a current collector made of aluminum foil, the dried coating had a total loading of 126 mg/cm² and a total thickness of 500 µm, and the rolled coating had a thickness of 380 µm so that the high-load pole piece of the positive electrode was obtained.
c. Propylene carbonate (PC, 5 µL) was dropped onto the high-load pole piece of the negative electrode, and the time for PC disappearance (liquid absorption time) was recorded as 725s.

A thick pole piece of a negative electrode was fabricated as follows.
a. The negative active substance artificial graphite, conductive agent (SP), binder sodium carboxymethyl cellulose (CMC), and binder styrene-butadiene rubber (SBR) were added to water at a weight ratio of 93.5:2.1:1.5:2.9, stirred, and uniformly mixed to obtain a negative electrode slurry having a solid content of 50%.
b. The negative electrode slurry was coated on a current collector made of copper foil, the dried coating had a total loading of 50 mg/cm² and a total thickness of 500 µm, and the rolled coating had a thickness of 380 µm so that a high-load pole piece of the negative electrode was obtained.
c. Propylene carbonate (PC, 5 µL) was dropped onto the high-load pole piece of the negative electrode, and the time for PC disappearance (liquid absorption time) was recorded as 122s.

A lithium-ion battery was fabricated as follows.
a. The thick pole piece of the positive electrode and the thick pole piece of the negative electrode, which were prepared by the preceding processes, were wound or laminated together with a PE separator into a cell core.
b. An electrolyte LiPF₆ of 1 mol/L was prepared, and a mass ratio of solvents was EC:DMC:EMC = 5:2:3, with 1 wt% VC, 1 wt% FEC, and 1 wt% 1,3-PS.
c. The electrolyte was injected into the prepared cell core, stood, and was subjected to pre-charge formation, and then relevant electrical performance tests were conducted. A 0.5C/0.5C charge/discharge cycle test was separately performed on Example 3, Example 4, and Comparative Example 2 at a temperature of 25 °C, and the capacity per gram of the first discharge capacity and the capacity retention rate of the battery after 400 cycles were recorded. Additionally, a 0.5C discharge test was performed on the battery at 25 °C/0 °C/-10 °C/-20 °C, and the capacity retention rates at different temperatures were recorded. The results are shown in Table 2.

**Table 2**

| No. | Coa ting Thic knes s/µ m | Liq uid Abs orpt ion Tim e of the Pos itiv e Ele ctro de/s | Liq uid Abs orpt ion Tim e of the Neg ativ e Ele ctro de/s | Capaci ty per Gram of the Positiv e Electr ode/m Ah.g⁻¹ | Capacity Retention Rate at Different Temperatures/% | | | | Capaci ty Retent ion Rate after 400 Cycles /% |
|---|---|---|---|---|---|---|---|---|---|
| | | | | | 25°C/25 °C | 0°C/25 °C | -10°C/2 5°C | -20°C/2 5°C | |
| Exam ple 3 | 380 | 663 | 95 | 195 | 100% | 91.8% | 88.5% | 80.7% | 79.2% |
| Exam ple 4 | 380 | 608 | 82 | 198 | 100% | 93.1% | 90.2% | 82.8% | 80.3% |
| Comp arativ e Exam ple 2 | 380 | 725 | 122 | 187 | 100% | 83.2% | 76.6% | 68.1% | 58.9% |

The technical solutions of the present application are described above in detail in conjunction with examples, but the contents are merely example embodiments of the present application and cannot be considered as limiting the scope of the present application. The scope of the present application is defined by the claims.

## Claims

1. A high-load electrode, comprising a current collector coated with at least two layers of slurry on a periphery of the current collector from inside to outside, wherein the slurry comprises an active substance, a conductive agent and a binder; and in a perpendicular direction from an outer surface of a pole piece to a surface of the current collector, a weight ratio of the binder and a weight ratio of the conductive agent increase in sequence in the respective layers of slurry, rolling compression amounts of the respective layers of slurry decrease in sequence, and a sum of rolling thicknesses of the respective layers of slurry reaches a design requirement.

2. The high-load electrode according to claim 1, wherein the slurry is a positive electrode slurry and the active substance is any one or a combination of at least two of lithium nickel cobalt manganate, lithium cobaltate, lithium manganate, lithium iron phosphate, and lithium manganese phosphate.

3. The high-load electrode according to claim 1, wherein the slurry is a positive electrode slurry and the conductive agent is any one or a combination of at least two of conductive carbon black, carbon nanotubes, and graphene.

4. The high-load electrode according to claim 1, wherein the slurry is a positive electrode slurry and the binder is any one or a combination of at least two of polytetrafluoroethylene, polyimide, polyacrylic acid, and polyacrylonitrile.

5. The high-load electrode according to claim 1, wherein the slurry is a negative electrode slurry and the active substance is any one or a combination of at least two of a graphite material, a silicon-based material, and lithium titanate.

6. The high-load electrode according to claim 1, wherein the slurry is a negative electrode slurry and the conductive agent in the negative electrode slurry is any one or a combination of at least two of conductive carbon black, carbon nanotubes, and graphene.

7. The high-load electrode according to claim 1, wherein the slurry is a negative electrode slurry and the binder in the negative electrode slurry is any one or a combination of at least two of sodium carboxymethyl cellulose, styrene-butadiene rubber, polyimide, polyacrylic acid, and polyacrylonitrile.

8. A method for preparing the high-load electrode according to any one of claims 1 to 7, comprising the steps of slurry preparation, slurry coating, drying, and rolling.

9. A lithium-ion battery comprising the high-load electrode according to any one of claims 1 to 7.
